Europäisches Patentamt

European Patent Office

Office européen des brevets

(11) Publication number: **0 366 625**

**A1**

## (12) EUROPEAN PATENT APPLICATION

(21) Application number: 89830463.9

(51) Int. Cl.⁵: **A47J 37/04**

(22) Date of filing: 24.10.89

(30) Priority: 28.10.88 IT 364388

(43) Date of publication of application:
02.05.90 Bulletin 90/18

(84) Designated Contracting States:
AT BE CH DE ES FR GB GR LI LU NL SE

(71) Applicant: **Cavallo, Vincenzo**
**Via Gabelli, 14**
**I-47037 Rimini (FO)(IT)**

(72) Inventor: **Cavallo, Vincenzo**
**Via Gabelli, 14**
**I-47037 Rimini (FO)(IT)**

(74) Representative: **Lanzoni, Luciano**
**c/o BUGNION S.p.A. Via Cairoli, 107**
**I-47037 Rimini (Forli)(IT)**

(54) **Oven for sausages.**

(57) This invention describes an oven for cooking sausages, of the kind consisting of at least one fixed source of heat, (2) with spits, (3) mobile in relation to said source of heat, (2) said spits, (3) being fitted with means of providing two different kinds of movement; both around their own longitudinal axis, (7) and their central axis, (8) parallel to said longitudinal axis, (7) in such a way that each of the sausages can rotate both on its own axis and upon said central axis, (8) thus being cooked perfectly evenly.

Fig. 3

EP 0 366 625 A1

## OVEN FOR SAUSAGES

This invention describes an oven for cooking sausages, of the kind designed with one fixed source of heat concentrated in one limited part of the cooking chamber, with spits, mobile in relation to. the source of heat. Usually in the above kind of oven, for the sausage to be cooked perfectly evenly, it is continually moved about in the cooking area in an attempt to expose its total surface area to the source of heat during cooking. As is known, the designs that have mainly been in use so far, consist of an oven designed with a horizontally arranged central shaft in the form of a rotating axis with a number of radial spits coming from it. A source of heat, generally electric, is located in the top of the oven. Different cooking positions can be obtained from the spits when the central axis is rotated, by the spits rotating with it.

However, the above-mentioned problem is only partially resolved by this cooking technique. It does, in fact, have considerable disadvantages, the main one being the fact that only half of the surface area of each spit is directly exposed to the source of heat, while the remaining half (namely the sides of the sausage), being either indirectly exposed to the heat or exposed only from the sides, is cooked more slowly; with the obvious consequence that the sausage is cooked.

A second disadvantage of this technique is the liquids seeping out while the sausage is being cooked, which drip onto the bottom surface of the oven, which, on account of the high temperature of the oven, give rise to unpleasant odours and fumes, which also taint the sausages.

It is, therefore, the purpose of this invention to overcome the afore-mentioned disadvantages. In the form of the claims characterising it, this invention resolves the problem and permits sausages to be cooked evenly in an oven with a fixed source of heat and mobile spits. This invention also enables the dripping of liquids seeping out during cooking to be if not overcome, reduced to the minimum, with obvious benefits both to the cleanliness of the oven and the sausages in question.

This invention is subsequently explained in greater detail in the following description with the diagrams enclosed, these being only one example of the invention and not to be interpreted as being in any way restrictive.

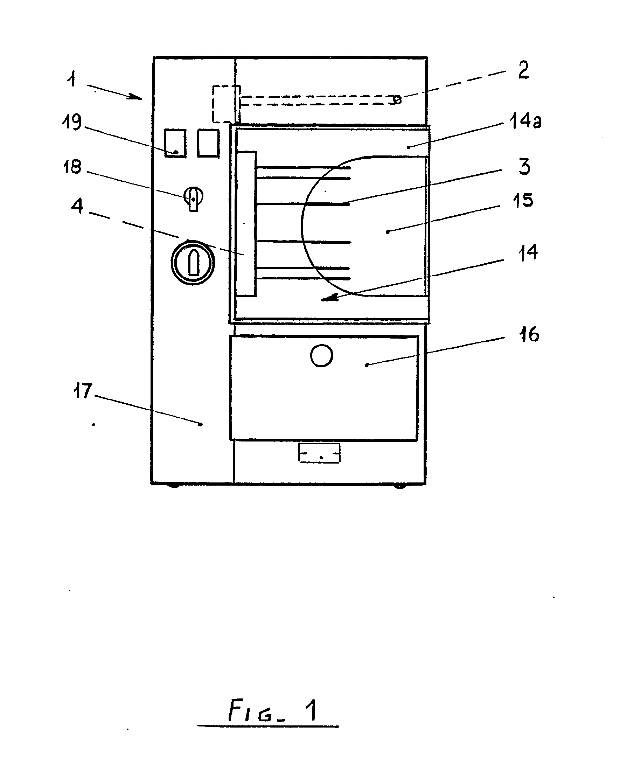

Fig. 1 is a diagram showing a front view, from the operator side, of an oven for cooking sausages constructed according to the terms of this invention.

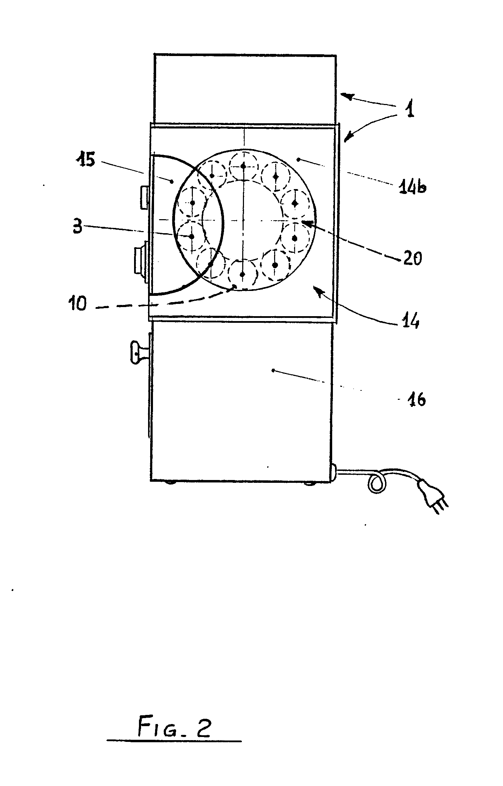

Fig. 2 is a diagram showing the side view of the oven shown in Fig. 1.

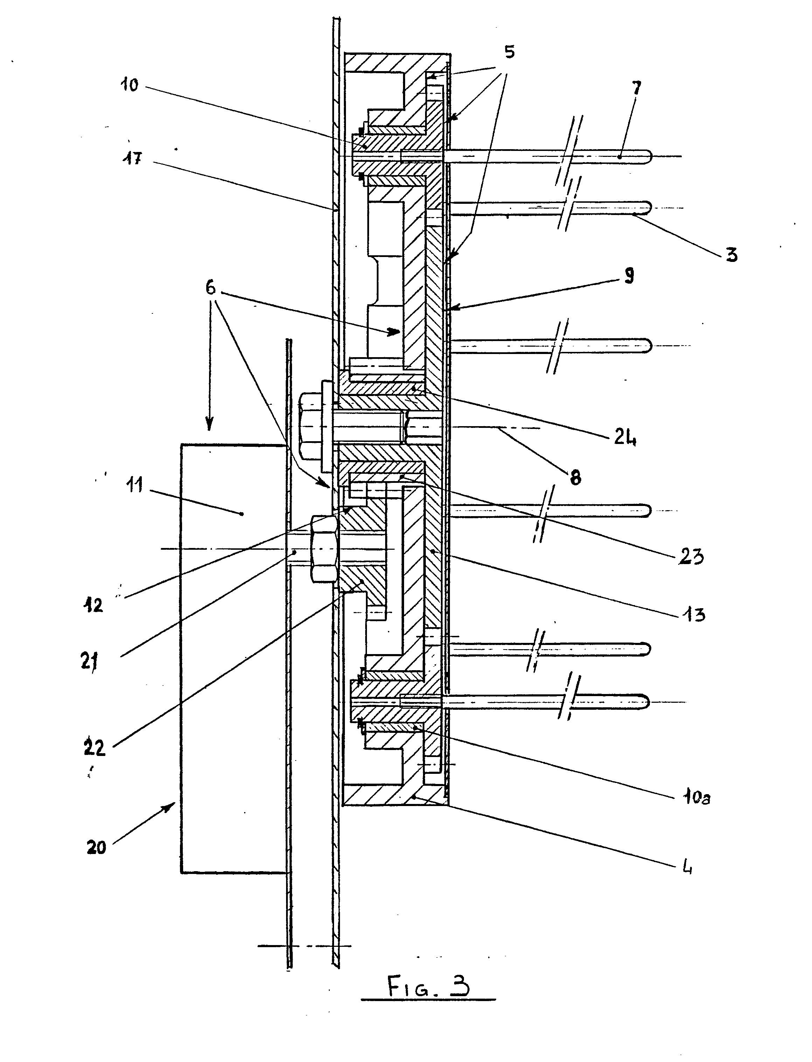

Fig. 3 is a diagram showing a side view of a vertical cross section of the mechanical parts of the drive mechanism used to move the spits in the oven that are shown in Figures 1 and 2.

With reference to the enclosed figures, it can be seen that this invention mainly consists of an outer metal casing, 1, containing an oven for cooking sausages at the top, and a steam heater, 16, for bread at the bottom. Going into further details, the oven has a cooking chamber surrounded by a metal structure, 17, on the one side, and heat-proof panes of glass, 14, on the other three sides. The heat-proof panes of glass, 14, have openings, 15, on the operator side on two adjacent sides, 14a and 14b, making it as easy as possible for sausages to be put into or taken out of said oven, as will subsequently be explained. An electric source of heat, 2, is located in the top part of the oven. On the operator side at the front of the metal construction, 17, there is at least one switch, 18, for starting up the reducer motor, 11, which is subsequently to be described, and for switching on the electric resistance of the source of heat, 2. A warning lamp, 19, shows when the switch in question, 18, has been turned on. The drive mechanism, 20, of the spits, 3, consists mainly of the afore-mentioned reducer motor, 11, whose drive shaft, 21, is linked to a gear coupling, 12. This coupling consists of a first toothed wheel, 22, splined to the wheel, 21, and meshing with a second toothed wheel, 23, which is fixed to and a mobile support, 4, thus constituting a central part. By means of a bush, 24, this toothed wheel, 23, is mounted coaxially to the hub of a fixed toothed crownwheel, 13.

The mobile support, 4, when it has a circular shape, it rotates on its own central axis, 8, for at least one circular curve, concentric to said central axis of rotation, 8, engaging a number of planetary gears, 10, mounted to idle upon a bush, 10a. During rotation of the support, 4, these gears, 10, engage with the toothed crownwheel, 13, concentric to the support, 4.

Each of these gears, 10, is fixed to a corresponding spit, 3.

A description of how the oven works will now follow.

The mechanism, 20, as described here enables two separate movements of the spits, 3. There are primary means, 5, of rotary movement for each spit, 3, around its own longitudinal axis, 7, as well as secondary means, 6, of movement of the spits, 3, themselves around the afore-mentioned central axis, 8.

Going into further details, the primary means, 5, consist of a toothed part, 9, in this case made up of the fixed toothed crownwheel, 13, and planetary gears, 10, that are being rotated around the toothed crownwheel, 13, by the support, 4. When the latter rotates around the central axis, 8, the gears, 10, are driven with it, and since they are engaged in the toothed crownwheel, 13, they are obviously also forced to rotate around their own axis, coinciding with the axis, 7, of each spit, 3. Whereas, the secondary means, 6, are simply designed to make the support, 4, of all the spits, 3, rotate around said central axis, 8. This is why, by means of the gear coupling, 12, the reducer motor, 11, is needed to transmit the necessary rotary motion, centred on the axis, 8, to the support, 4. It is, therefore, obvious that a single reducer motor, 11, will be sufficient for all the movements required by the spits, 3. It is important to note that only the primary drive means, 5, are needed to cook each sausage, thus guaranteeing that the sausages are evenly cooked.

The secondary drive means, 6, form an essential part of this invention, since they make the principle of even cooking possible, even when the sausages are placed in a straight line along a much more extended circumference, involving various different cooking distances.

It is worth emphasising that the secondary drive means, 6, allows all the sausages to be cooked evenly, since each sausage is equally exposed to cooking, for the very reason that the support, 4, rotates the sausages around an ideal circumference.

This invention can be subjected to numerous modifications and variations, all of which are within the terms of this invention. Furthermore any or all of these details can be replaced by their technical equivalents.

Obviously, in practice, this invention may be subjected to modifications and/or improvements which are to be within the terms of the following claims.

## Claims

1. Oven for cooking sausages, of the type equipped with a fixed source of heat (2) and spits (3) which are mobile in relation to said source of heat (2), **wherein** each spit (3) is horizontally supported, in an idling and offset manner, by a support (4), and is subject to the action of primary drive means (5) for rotary movement around its own longitudinal axis (7).

2. Oven according to the description in claim 1, **wherein** said spits are not only subject to the action of said primary drive means (5), but also to the action of secondary drive means (6) around their own central axis (8), parallel to the longitudinal axis (7) of each spit (3).

3. Oven according to the description in claim 1, **wherein** said primary drive means (5) consist of at least one toothed gearing unit (9) with a number of gears (10), each fixed to its corresponding spit (3) and held by said support (4).

4. Oven according to the description in claim 2, **wherein** said secondary drive means (6) consist of a reducer motor (11) which, by means of a gear coupling (12) causes said support (4) of the spits (3) to rotate around said central axis (8).

5. Oven according to the description in claim 2, wherein said secondary and primary drive means (6, 5) consist of a reducer motor (11) which, by means of a gear coupling (12) causes said support (4) of the spits (3) to rotate around said central axis (8), so that along a curve which is at least circular and concentric to said central axis of rotation (8), said support engages a number of planetary gears (10), each fixed to its corresponding spit (3) and meshing with a fixed toothed crownwheel (13) concentric to said support (4) of the spits (3), said movement being relative to the afore-mentioned toothed crownwheel (13) and said support (4) and conferring each spit (3) with rotary movement around its own longitudinal axis (7) during rotation of said support (4) around said central axis (8) conferring each spit (3) with rotation around the central axis (8) itself.

6. Oven according to the description in claims 1 and 2, wherein its surrounding parts are constructed in panes of heat-proof glass (14) which have openings (15) on the operator side, on the two adjacent sides (14a - 14b) of said panes of heat-proof glass (14).

FIG. 1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-839068 (ROTISS-O-MAT LTD.) <br> * the whole document * | 1-6 | A47J37/04 |
| X | US-A-1786300 (HARRISON) <br> * the whole document * | 1-5 | |
| A | US-A-4372199 (BROWN ET AL) <br> * the whole document * | 1 | |

TECHNICAL FIELDS
SEARCHED (Int. Cl.5)

A47J

The present search report has been drawn up for all claims

| Place of search | Date of completion of the search | Examiner |
|---|---|---|
| THE HAGUE | 13 FEBRUARY 1990 | MEINDERS H. |